# EUROPEAN PATENT SPECIFICATION

(11) **EP 4 158 182 B1**
(45) Date of publication and mention of the grant of the patent: **17.07.2024**
(21) Application number: 21736363.9
(22) Date of filing: 25.05.2021
(51) Int. Cl.: F03B 3/04, F03D 1/04, F03D 1/06, F04D 29/32, F04D 29/18, F03B 17/06, F04D 29/54

(54) **BIVALENT AXIAL TURBOMACHINERY**
BIVALENTE AXIALTURBOMASCHINE
TURBOMACHINE AXIALE BIVALENTE

(30) Priority: 28.05.2020 IT 202000012712
(43) Date of publication of application: 05.04.2023
(73) Proprietor: UNIVERSITA' DEGLI STUDI DI GENOVA, 16126 Genova (IT)
(72) Inventor: CRAVERO, Carlo, 16126 Genova (IT); MILANESE, Gabriele, 16126 Genova (IT)
(74) Representative: Karaghiosoff, Giorgio Alessandro
(86) International application number: PCT/IB2021/054535
(87) International publication number: WO 2021/240366

(56) References cited:
- WO-A1-2006/029496
- WO-A1-2015/019597
- NL-A- 9 400 050
- US-A- 3 343 512
- US-A- 3 946 688

## Description

### TECHNICAL FIELD

The present invention relates to the field of continuous fluid rotary machines and in particular in the turbomachinery stage comprising, in addition to a stationary rotating member (rotor), a fixed member (stator) suitably coupled to the rotor to improve the overall performance of the machine.

In turbomachinery area, the invention describes a stage that can operating with high efficiency both in operating and driving mode with the same configuration.

### BACKGROUND OF THE INVENTION

In the literature, examples of 'bivalent' machines are well known, that is designed to work in both operating and driving modes, with radial or mixed flow; studies on axial flow machines of this type are less frequent.

In fans and compressors area, the performance and fluid dynamics of these machines in drag conditions have recently been studied, while in the field of axial pumps studies have been carried out on the possibility of their use as turbines.

At the state of the art, there are unknown solutions of axial turbomachinery that can operating bivalent with a similarly high efficiency and conveniently use in applications that benefit from a single simple device that can act by transferring or withdrawing kinetic energy of the fluid in which they operate.

Document WO 2015/019597A1 describes a propeller fan designed to maximize efficiency with respect to operating and driving modes, wherein the camber line (CLS) of the propeller has a camber line on the front side which is upstream of the wind flow and a line of camber on the rear which is downstream of the wind flow. The propeller fan has an S-shaped wing in which the lateral camber line of the front end is formed as a convex arc with respect to the axial flow which is the direction of the absolute speed of the incoming wind, and in the rear of camber line on the final side is formed as a concave arc with respect to the axial flow direction which is the direction of the absolute speed of the incoming wind.

This configuration, although efficient, can be improved both in terms of the blades profile, and through an optional ducting in a specifically shaped duct to maximize the efficiency of a bivalent turbomachinery.

The purpose of the present invention is to take advantage of the positive characteristics of a rotor-stator configuration which, in the operating mode, is crossed by the flow in one direction and, in the driving mode, by the same fluid but in the opposite direction.

The proposed configuration also has the characteristic of being able to be inserted in a suitably shaped duct, also part of the present invention, specifically designed to be combined with the rotor-stator assembly for operation in a free ambient, being able to work in any case both in operating and driving mode while maintaining high performance in terms of efficiency in converting the mechanical energy supplied to the turbomachinery stage into kinetic energy (when in operating mode) and in converting the kinetic energy of the fluid that passes through the stage (when in driving mode) is in driving mode.

The invention can be used in many applications. Whenever you have a fan or an axial pump (or propeller) it is possible to think about replacing the component with the proposed solution in order to obtain a bivalent configuration which, in addition to performing the original functions, allows the use of available energy for power generation when not engaged for the original purpose; for example, applications can be identified in artificial snow generation systems, in industrial fans or pumps, in UAV systems with axial propellers.

The device described here consists of an axial turbomachinery stage, assembled of a rotor and stator, which can be used with high efficiency and in a wide operating range, both with operating and driving modes.

Specific attention was paid to operating conditions with free inlet flow, or without interactions with ducts or other external bodies that modify the circulating fluid flow.

Further advantages and characteristics of the device according to the present invention will become clear from the following description also with reference to the tables of the attached drawings, wherein:
- Figure 1 shows a representative three-dimensional geometry of the machine made in accordance with the invention.
- Figure 2 shows a two-dimensional section of a rotor blade and stator respectively.
- Figure 3 shows an embodiment of a converging-diverging profiled duct according to the method object of the invention.
- Figures 4 and 5 show a 2D simulation of the flow and pressure field respectively in operating and engine or turbine mode.
- Figures 6 and 8 show a 3D simulation in a duct of the flow and pressure field in operation for operating and driving machines, respectively.
- Figures 7 and 9 show some significant performance values measured respectively for the operating machine and driving machine.
- Figures 10 and 12 show the current lines that cross the machine for the operating and driving machines respectively.
- Figure 11 shows the overall dimensional performance for the fully ducted configuration of an operating machine.
- Figure 13 compares the power coefficient trends Cp as a function of the 'tip-speed-ratio'.
- Figures 14a and 14b present a potential two-dimensional section profile of the blade in accordance with the invention.

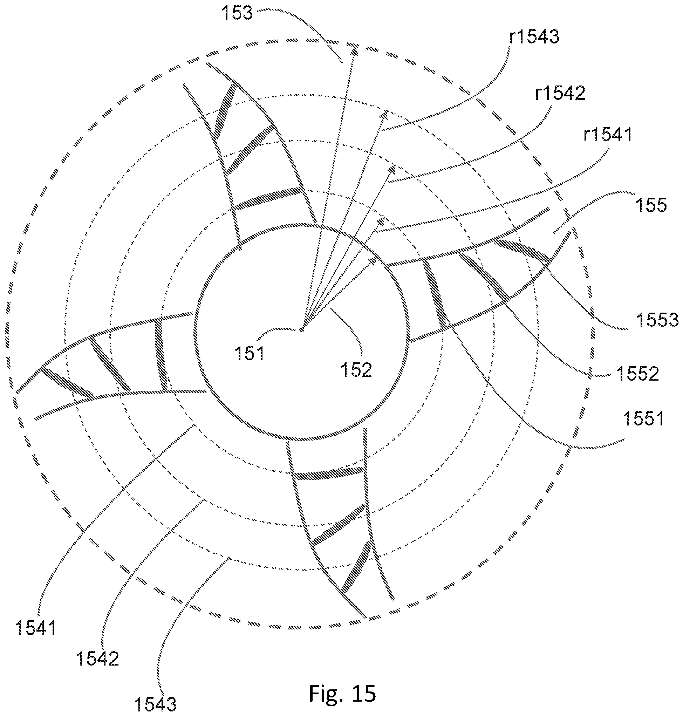

- Figure 15 shows an exemplary form of a rotor or stator according to a front view.

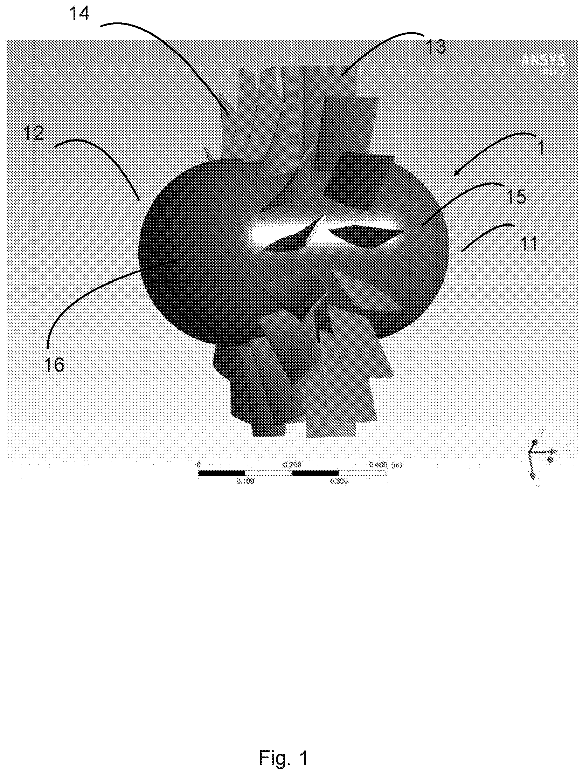

Fig. 1 shows a representative 3D geometry of the machine in content 1, comprising a rotor 12, a stator 11. The rotor is equipped with many blades 14 essentially identical in shape and arranged around a hub 15, similarly to the stator with the blades 13. Rotor and stator can comprise a tapered shape area, which covers or is an integral part of the hub known as ogive. In operating mode, the rotor and stator are crossed from left to right and in the opposite direction in turbine mode.

In the first case, mechanical power is supplied to the rotor which, by rotating in one direction, increases the energy (pressure energy and kinetic energy) of the fluid passing through it. In the second case, the fluid gives energy to the rotor making it rotate in the opposite direction.

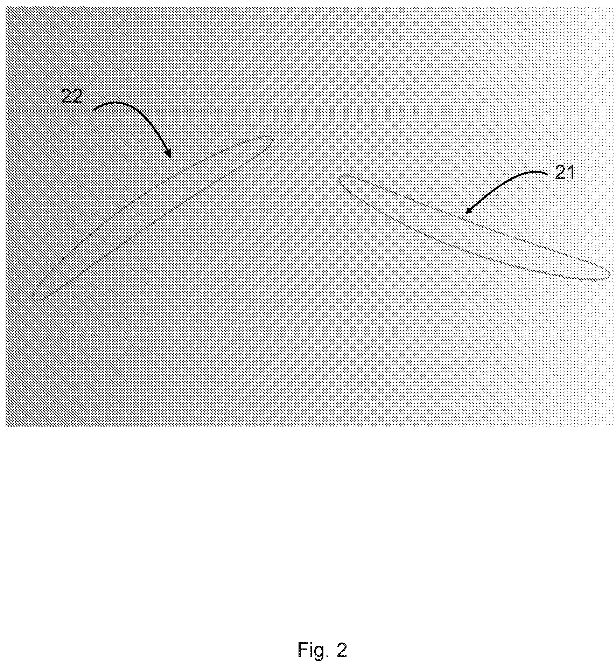

The configuration of this machine allows to maintain the following characteristics in both operating modes:
The two-dimensional section shown in fig. 2 introduce a view of possible two-dimensional stator and rotor profiles thanks to which the blades offer favourable characteristics which are maintained in both operating modes:
I) the combined action of rotor and stator tends to cancel the tangential component of the speed at the outlet, minimizing the energy lost in the exhaust pipe.
II) the fluid dynamic function of pressure and depression sides, carried out respectively by the concave and convex side of the rotor and stator profiles, is efficient both in driving and operating modes.

The first feature is particularly advantageous for 'slow' machines that operate with free inlet flow.

In fact, in this condition the kinetic energy at the outlet is completely lost, so its recovery, even partial, allows to improve the conversion of energy.

In the ideal case where the flow and construction angles coincide (at the inlet and outlet) of the blades, simple geometric considerations show that it will be possible to use both characteristics mentioned above, keeping the rotor speed unchanged in the two modes.

In the usual case where fluid dynamic and constructive angles differ, to benefit from the two characteristics, it will be necessary to consider the incidence and deviation angles of the two modes.

The invention provides for the design of turbomachinery stage with:
a) different rotation speeds for the two operating modes.
b) distributions of solidity (ratio pitch/chord of the array blades) and constructive angles of the efficient profiles in both operating conditions.

The invention achieves the scope with a method for the design of rotor and/or stator profiles of a bivalent axial turbomachinery stage comprising the steps of:
- select the maximum positive deflection value.
- arrange the maximum deflection value between 40% and 60% of the chord abscissa.
- select the ordinate of the median segment with derivative greater than or equal to zero up to the point of maximum deflection and less than or equal to zero after the point of maximum deflection.
- place the point of maximum half thickness between 40% and 60% of the abscissa of the chord.
- select the radius of the front edge and the rear edge with values greater than or equal to 3% of the length of the chord segment.

In a first embodiment there is the further step of selecting the half-thickness with derivative greater than or equal to zero up to the point of maximum half-thickness and less than or equal to zero after the point of maximum half-thickness.

In a preferred embodiment, the parameters of the method are selected in such a way that the profile resulting from the application of said method has a symmetrical conformation with respect to the middle of the chord, a configuration that brings advantages in terms of lift and high efficiency over a wide operating range (otherwise a wide range of the inlet flow angle) both in turbine and operating machine operation. In particular, the symmetry with respect to the axis passing through the mid-chord point is obtained by setting the point of maximum deflection and the point of maximum thickness on said symmetry axis, or by setting the point of maximum deflection and maximum thickness at the 50% of the abscissa of the chord segment.

In a further embodiment, the invention comprising the steps of:
- define the number of blades making up said rotor or stator distributed along a concentric circumference to the rotation axis of said rotor or stator.
- defining the value of the maximum radius of said rotor or stator and the value of the minimum (152) and maximum (153) blade radii for said rotor or stator.
- identify a blade section(1551, 1552, 1553) obtained by intersection of said blade (155) with a surface of revolution and in particular cylindrical (1541, 1542, 1543) of a solid of revolution arranged coaxially to the rotation axis (151) of said rotor and/or stator, being said surface defined by a specific radius value (r1541, r1542, r1543) for each point of the axis of the surface of revolution and therefore being said section of blade (1551, 1552, 1553) obtained by intersection of said blade (155) with said surface of revolution at a radial distance coinciding with the radius of the surface of revolution.
- defining a discrete number of said blade sections (1551, 1552, 1553) having defined a corresponding discrete number of said radius values of said surface of revolution (r1541, r1542, r1543), said radius values being between said minimum (152) and maximum blade radius (153) of said rotor or stator for each point of the axis of rotation;
- report for each of said sections and for each blade a two-dimensional aerodynamic profile (140) whose keying or angular orientation respect to the radial axis of said surface of revolution and whose dimensions, given the same shape, assume predetermined and varied values according to the reference section;
- interpolating between the shapes of the various sections the said two-dimensional airfoils of each blade by means of computer-assisted processing to define the three-dimensional surface representative of the blade itself where the said two-dimensional airfoils represent the sections of each blade;
the said two-dimensional aerodynamic profile having a symmetrical conformation respect to the axis (147) orthogonal to the chord segment (141) and passing through the midpoint (148) of the said chord segment.

In this non-limiting embodiment, the construction of the two-dimensional aerodynamic profile is achieved by defining its median segment and the corresponding thickness distribution by points. The points of the extrados (convex side) and of the intrados (concave side) corresponding to each point of the median segment are obtained respectively by adding and subtracting the half thickness, along the normal to the median segment.

In a one-way turbomachinery (designed to be crossed by flow in one direction only), the airfoils are characterized by a leading edge and a trailing edge (where the leading edge is the first to be encountered). from the fluid passing through the blades, in the machine object of the present invention, the leading edge in operating mode becomes the trailing edge in turbine mode and vice versa. The bidirectional profile with deflection as defined allows to obtain better efficiency over a wide range of flow rate/working pressure and further advantages are obtained by using profiles with symmetrical geometry with respect to the mid-chord point, that is symmetrical with respect to a normal axis to the chord and passing through the midpoint of said segment.

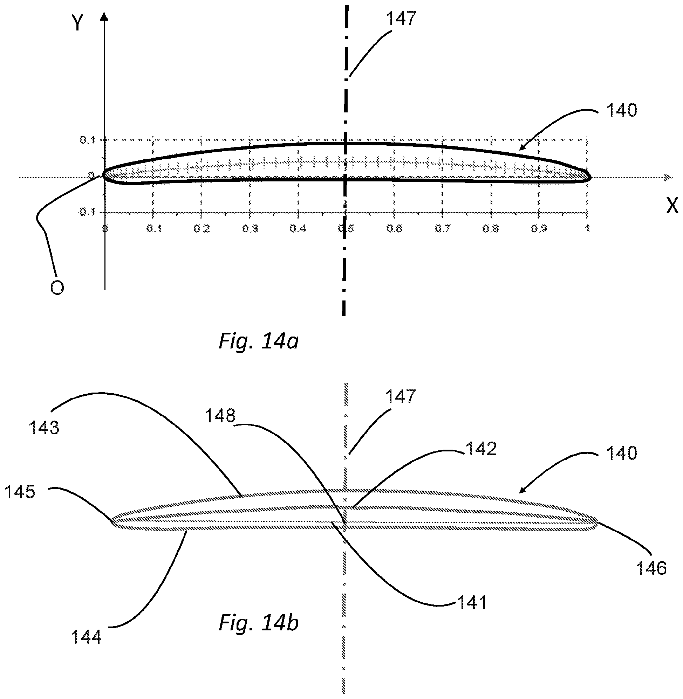

In particular, for this virtual prototype, the profile of figs. 14a and 14b has been defined. In these figures it is possible to observe the resulting profile 140, for which the median segment 142 is conceived defined as an equidistant segment between the back 143 also known as the convex or extrados side and the belly 144 also known as the concave or intrados side.

The chord 141 or chord segment is a straight segment that joins the ends of the median segment; in the profile of figures 14a and 14b it is also possible to identify the front and rear edges 145 and 146 which in the profiles of blades for single use (only operator or only tractor) alternatively take the name of leading edge or leading edge and outlet or trailing edge depending on the flow of fluid passing through the stage. In this text, reference will be made to the front edge 145 and the rear edge 146 but since the invention is aimed at a bivalent machine, the path of the fluid and therefore the role of the profile edge depends on the mode of operation.

In figure 14a a Cartesian reference system XY is introduced where the abscissa axis is superimposed on the chord segment 141 and the origin of the axes coincides with the front edge 145. The axis 147 of the chord segment is also identified which passes through the midpoint 148 of said segment and with respect to which the profile 140 is constructed in a symmetrical manner.

In the variant of figures 14a and 14b, exemplary and non-limiting form of the invention, the main characteristics of the profile used are:
- ratio between the maximum thickness of the profile and the length of the chord equal to 0.1;
- distance between the median segment and the chord segment not exceeding 4% of the chord length for each point of said line;
- angle between the median segment 142 and the front edge 145 equal to 9 sexagesimal degrees corresponding to an entry angle of 9° ;
- angle between the median segment 142 and the rear edge 146 equal to -9 sexagesimal degrees corresponding to an exit angle of - 9° ;
- radius of both edges equal to 4.5% of the chord.

The specific profile used for the virtual prototype is to be understood as representative of the symmetrical profile category described above.

The geometry of the rotor and stator is created by defining the number of blades, the minimum and maximum radii and the blade sections with the procedure described above (2D profiles wind up on cylindrical surfaces). For each blade section the following are assigned:
- the radius of the section.
- the length of the profile (chord);
- the angle (keying) with respect to the tangential direction.

The values used in the design of a possible and not unique implementation of the rotor and stator are shown in the following tables. In other implementation variants, both the ratio between the minimum and maximum diameter and the chord and angle distributions may change according to the performance of the machine.

A possible embodiment provides that in the realization of a turbomachinery stage in accordance with the method object of the invention the following specific parameters are used:
- for the rotor:

| Radius | Chord | Keying |
|---|---|---|
| [cm] | [cm] | [°] |
| 20 | 12.6 | 73.3 |
| 30 | 10.1 | 49.0 |
| 40 | 8.4 | 37.0 |

- for the stator:

| Radius | Chord | Keying |
|---|---|---|
| [cm] | [cm] | [°] |
| 20 | 10.9 | 66.3 |
| 30 | 11.3 | 76.3 |
| 40 | 11.7 | 81.6 |

The dimensions of this particular embodiment have been used for the theoretical verification of the performance of a stage in accordance with the present invention but must not be considered as limiting the potentiality of the method of producing bivalent turbomachinery with high efficiency both in operating mode that driving and in different operational contexts such as for example use in air or water.

The machine described can be installed in the duct of a plant, or in a 'free ambient, where the machine is crossed by an external flow (for example in the case of a wind turbine) or sucks in flow from the outside (for example in the case of a fan).

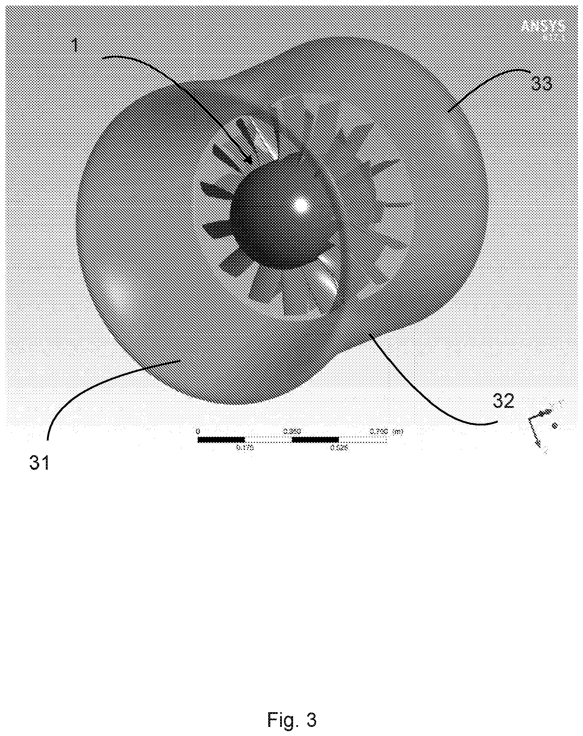

In order to improve the performance of the machine in the second case, a converging-diverging profiled duct has been studied as shown in figure 3 which allows an adequate recovery of static pressure at the exhaust pipe, presenting a section 31 with a section that narrows as it approaches the rotor, a section at constant section 32 containing the rotor and stator and a section 33 with a section which increases away from the stator. The conformation of these sections is an object of invention and will be described below.

In order to verify the applicability of the foregoing and to arrive at the definition of a first virtual prototype, numerical RANS simulations were used using ANSYS software.

The study carried out was supplied by an appropriate sensitivity analysis of the results to the size of the calculation grid. The main results of interest are presented below.

The fluid considered in all the work is air under standard conditions although it is expected that the turbomachinery can also operate with incompressible fluids such as water.

### Two-dimensional preliminary analysis

A first check was made on a 2D geometry, defining the Eulerian energy exchanged by the rotor and using the relation that binds Cp (coefficient of lift), Cr (coefficient of drag), solidity and angles of the flow, to obtain the geometry of the stator rotor.

The operation of this first geometry was simulated by means of a numerical solution RANS (ANSYS).

The same fluid speed has been set at the respective inlets, while the rotation speeds used are 1500 rpm for the operating machine and 800 rpm for the turbine.

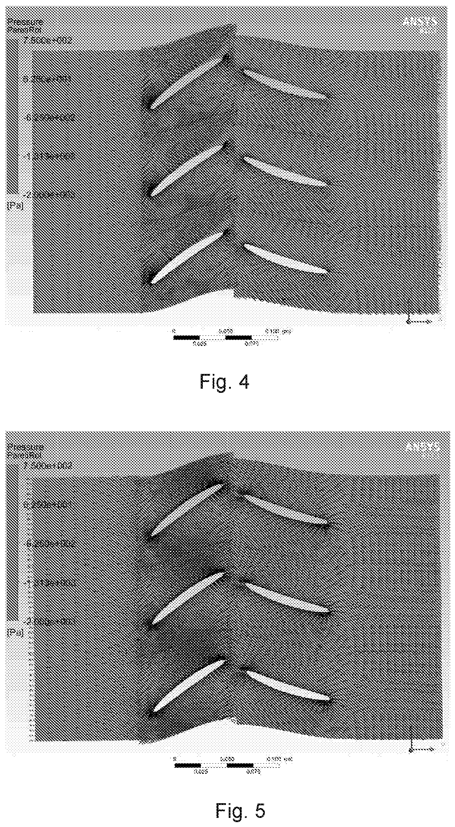

Figures 4 and 5 show the fields of motion and static pressure for the 2 modes, highlighting how the flow at the outlet is almost axial (with no tangential component) for both.

For each of the two cases, the corresponding performance was assessed:
- operating mode, the ratio between the power transferred to the fluid and the power supplied to the axis.
- turbine mode, the ratio between the power obtained from the axis and the power available from the fluid.

### Three-dimensional analysis in the duct

Considering the 2D case as representative of the medium radius section, the corresponding 3D geometry was designed, using a code based on the theory of radial equilibrium developed in research activities.

The following input data were considered:
- external and internal diameters of the machine respectively of 0.4 m and 0.2 m.
- design speed the same used for the 2D case.
- number of rotor and stator blades equal to 15.

The operation of the 3D rotor-stator was initially simulated in a 'ducted' configuration, that is by inserting the stage in a duct and assigning the boundary conditions in the inlet and outlet sections of the duct.

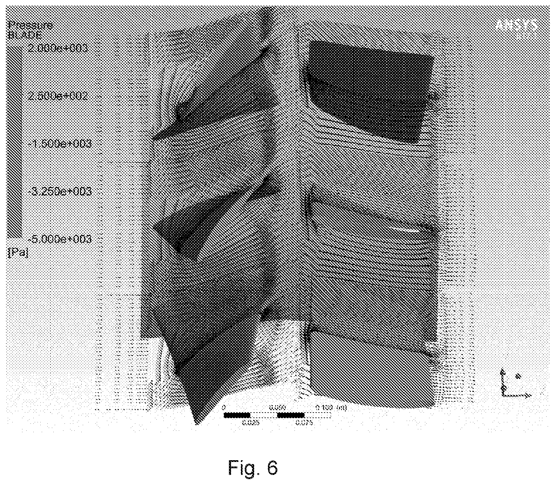

In fig. 6 shows the field of motion which passes through the operating machine and the corresponding one static pressure field on the blades.

You can see the rather uniform radial distribution of the static pressure and, on the leading edge of both blades, the good positioning of the stagnation point at the front edge of the blade
(index of correct incidence of the flow at the point of operation).

### Performance detected

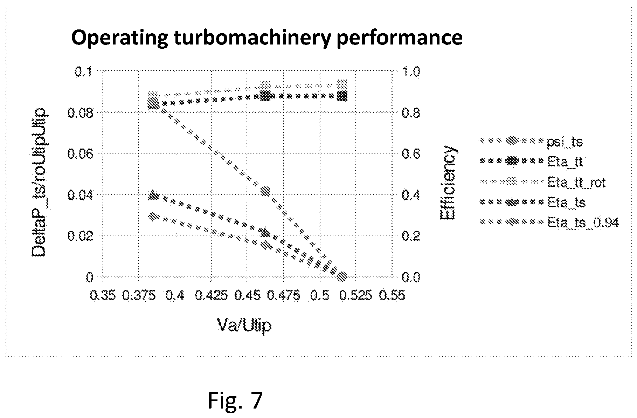

The graph of Fig.7 shows the dimensionless global performance of interest:
- ηtt = Power_transferred_to_fluid/Power_supplied
- Power_transferred_to_fluid = volumetric_flow * (p_total_output-p_total_input) [W]
Power_supplied = CΩ [W]
- C = torque supplied to the shaft [Nm]
- Ω = rotor rotation speed [rad/s]
- total_pressure = static pressure + dynamic pressure [Pa]
- ηts = Useful_power_transferred_to_fluid / Power_supplied
- Useful_power_transferred_to_fluid = volumetric_flow * (p_static_output-p_total_input) [W]
- ψts = (output_static_p-input_total_p) / (density * Utip * Utip)
- φ = Va / Utip
- Utip = QRtip [m/s]
- Rtip = radius at the apex of the blades [m]
- Va = volumetric flow rate/area [m/s]
- Area = π (Rtip2-Rhub2) [m^2]
- Rhub = hub radius [m]

The total-to-total efficiency (ηtt) of the rotor alone and of the entire machine have maximum values close to or greater than 90% over a reasonably wide operating range.

The total-to-static efficiency (ηts) of the machine serves to highlight the efficiency of the machine
operate with free discharge (condition in which the kinetic energy at the discharge is lost).

Since the ideal maximum value of ηts is a function of the work point (example for ψts = 0.0 ηts ideal maximum is 0.0), in the graph the reference values obtained with a 1D model, for a standard machine equipped with a rotor only operating with ηtt = 0.94, have been put as a reference (red curve).

The comparison with the reference allows to appreciate the good contribution provided by the stator in the proposed configuration.

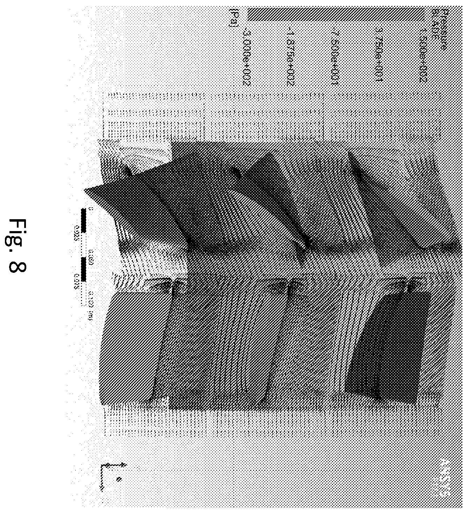

In fig. 8 shows the field of motion that passes through the same machine in operation as driving machine (turbine) and the corresponding static pressure field on the blades.

Also in this mode, it is possible to notice the good radial distribution of the static pressure and, on the leading edge of both blades, the good positioning of the stagnation point (index of correct operation of the profile also in this condition opposite to the previous one).

Furthermore, as in the operating mode, the reduced tangential component of the speed is highlighted at the exit which indicates the high capacity of extraction of work from the incoming flow. Also for this aspect is confirmed the good behaviour seen in the preliminary 2D simulation.

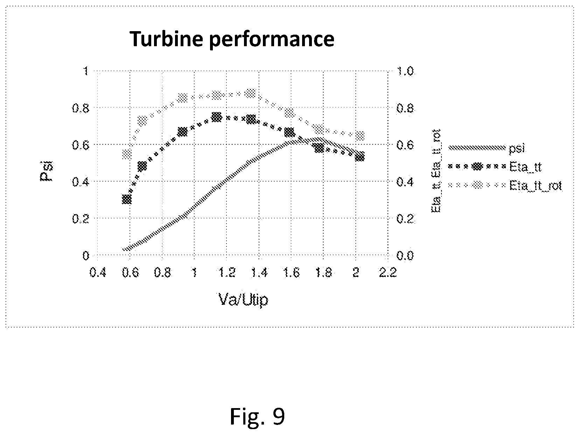

In the graph of Fig. 9 shows the most important non-dimensional global performances:
- ηtt = Power_supplied/(volumetric_flow*(p_total_output-p_total_input))
- ψ = load factor = (Supplied_power/volumetric_flow) / (density * Utip * Utip)

The total-to-total efficiency (ηtt) of the rotor alone has a maximum value of just under 90%.

The efficiency of the entire machine, considering the high value of the flow rate coefficient φ and the low load coefficient ψ also reaches high values.

Even in turbine mode, the machine exhibits a reasonably large operating range.

### 3D analysis in a free ambient

Finally, the operation of the machine in a free ambient was simulated, that is when the ducted turbomachinery stage is powered by an external flow and discharges in a free ambient. In this case the computation domain of the simulations is extended with an external volume that encloses the configuration of machine. This representation is the one that simulates the real operational situation of the configuration proposal.

The machine was housed inside a duct obtained by revolving an aerodynamic profile which characteristics, in an embodiment of the present invention, have been defined as a function of the sesigned Oulet Area /minimum area _ratio and in such a way to reduce the possibility of flow separation (limiting the curvature of the profile).

The duct consists of:
1) length with section that narrows as it approaches the rotor;
2) length with constant section, containing the rotor and the stator;
3) length with section that increases moving away from the stator.

The surface that delimits the duct from the part of the root of the blades, in section 1), is a spherical cap with a radius equal to the minimum radius of the rotor blades (that is the radius of the rotating part of the hub or the root of the blades).

The surface that delimits the duct from the part of the root of the blades, in section 3), is a spherical cap with a radius equal to the minimum radius of the stator blades (that is the radius of the fixed part of the hub or the root of the blades).

The surface that delimits the duct from the part of the apex of the blades (rotor and stator), in sections 1), 2) and 3), is obtained by revolution of a two-dimensional shape or profile around the rotation axis of the machine. The two-dimensional shape consists of two portions of aerodynamic profile, used to define the sections 1) and 3), the ends of which are joined by straight sections.

The portions of the aerodynamic profile are characterized similarly to what is done for the sections of the rotor and stator blades, that is by means of average line and thickness distribution.

In one of the possible embodiments of the invention, the two-dimensional profiles are defined by assigning the median segment and thickness distribution.

A further detailed embodiment, also not limiting, provides that the two-dimensional profile used for the section on the side of the rotor has:
- Length of the chord segment of a value not exceeding 1.5 times the hub radius and preferably of a value equal to 1.25;
- deflection value lower than 25% of said length of the chord segment and preferably equal to 24%;
- Maximum thickness equal to 30% of the axial length.

The ratio between the maximum and minimum passage areas of the duct section 3) is 2.1 (general maximum value 2.5).

In another embodiment, freely combinable with the previous ones or a combination of them, the two-dimensional profile used for the section on the stator side has:
- Length of the half chord segment of a value not exceeding 1.25 times the maximum blade radius and preferably of a value equal to 0.75;
- deflection value less than 20% of said length of the half chord segment and preferably equal to 18%;
- Maximum thickness equal to 50% of the length of the half chord segment.

It follows that the ratio between the maximum and minimum passage areas of the duct section is 1.7 (general maximum value 2.0).

As in the case of the two-dimensional section used to define the rotor and stator blades, the specific geometry of the duct of the virtual prototype is an example of the general characteristics of the machine and does not limit the scope that can include other embodiments, even freely combines -able to each other.

The simulation of the operating machine was carried out by inserting it between two separate ambients (typical reference configuration of test benches for fans according to the reference standards).

The simulation of the driving machine (turbine) was done by placing the machine in a single external ambient.

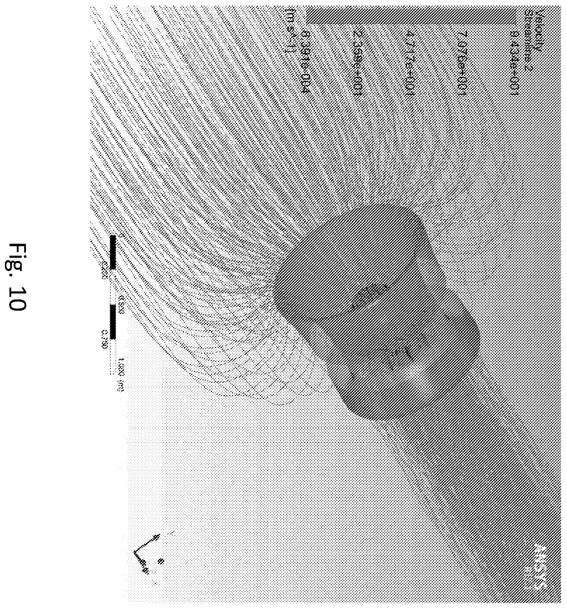

Fig. 10 shows current lines that cross the machine in operating mode.

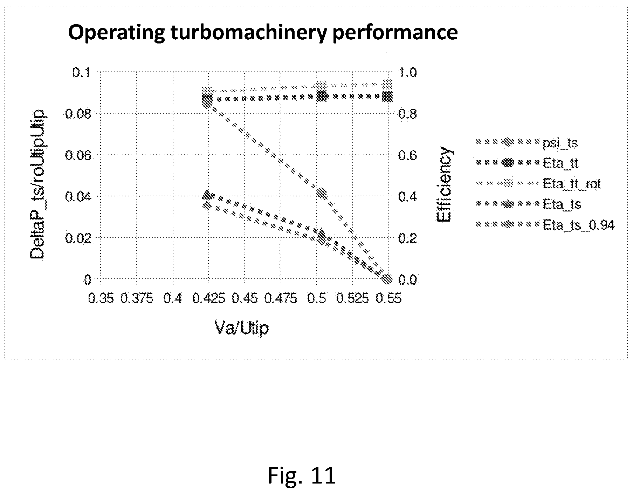

The graph of Fig. 11 shows the dimensionless global performances which confirm the good behaviour seen for the fully ducted configuration.

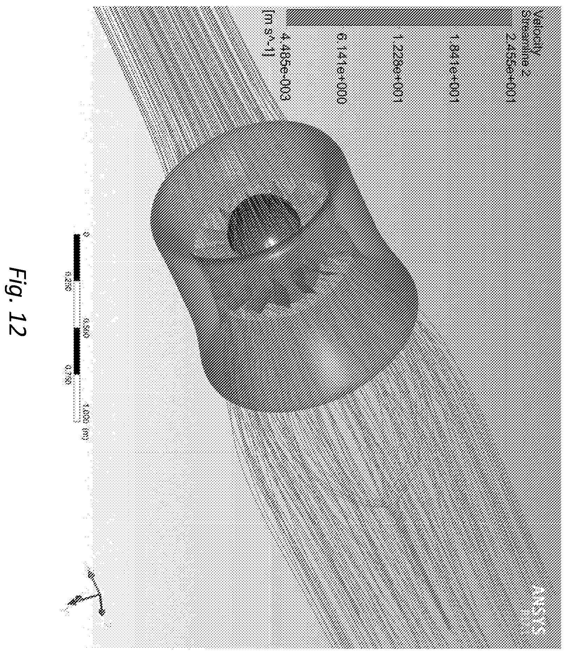

Fig. 12 shows the current lines that cross the same machine in operation as a turbine (entrance section from the left).

In the latter case, the machine is in fact a wind turbine in an innovative configuration.

The performances of this configuration can therefore be compared with the reference trends of the classical rotor configuration of a horizontal axis wind turbine.

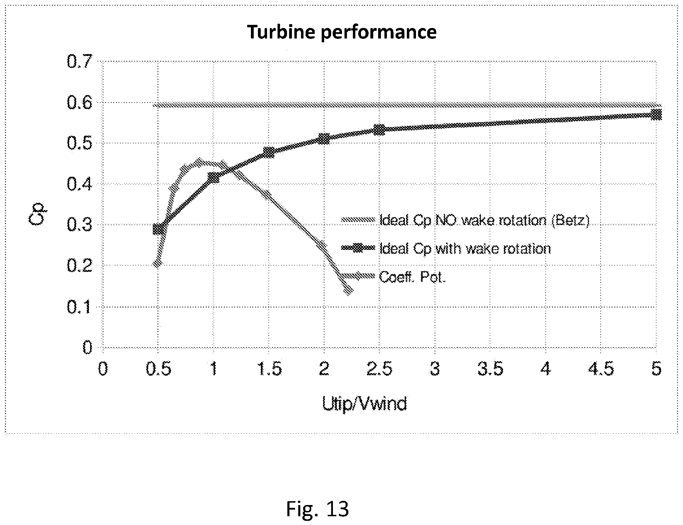

In Fig. 13, the power coefficient trends Cp are compared as a function of the 'tip-speed-ratio':
- Cp = Power supplied / (0.5 * Area * Vwind3)
- Vwind = external wind speed [m/s]
- Areat = πRtip2 [m^2]
- tip speed ratio = Utip / Vwind

The performance of the machine in question is compared with the two classic limits for rotors of wind turbines with horizontal axis: the Betz limit value (valid in the absence of a component circumferential of the outflow) and the corresponding ideal value obtained considering the circumferential component.

It can be seen (Fig. 13) how the effectiveness of the stator and of the 'profiled' external duct allow to obtain overall performances (red curve) that can significantly exceed, over a wide range of tip-speed-ratio, the ideal limit. with circumferential component at the outlet.

The proposed configuration presents, with respect to the knowledge on the state of the art, the following innovative characteristics:
- assembly of rotor (rotor array) and stator (stator array) component with axial flux inserted in a profiled duct with axial discharge in a free ambient with reversible operation (operating machine - driving machine);
- aerodynamic profiles of rotor and stator blades suitably designed to have good performance in both forward and reverse operation of the machine;
- ducted wind turbine configuration with stator component capable of operating in reverse flow as an axial fan.

The previously illustrated checks show how the application of the present invention allows to realize stages of turbomachinery capable of operating alternatively by giving energy to the fluid or being moved by the fluid with near and sometimes more than 90% efficiency. This undoubted advantage allows the use of the embodiments of the invention in multiple fields of application, for example in combination with a control system, at least one energy source and at least one energy storage element, at least one motor combined with said rotor, one or more sensors, one or more control members for one or more members for switching the operating mode of said stage, the control system being involved in the switching of said turbomachinery from driving mode to operating mode and vice versa.

The control system is therefore able to read the operating parameters of the machine combined with one or more preferably electric motors and, in an automatic or manual manner, activate suitable switching devices which vary the mode of the machine. which can be operated by said motor which absorbs energy from a source or can operate the commutated motor to generate electrical energy to be stored in suitable storage systems. This makes the invention particularly suitable for all applications where the fluid conditions are not constant but change over time: applications such as pumping systems, propeller propulsion, renewable energies are envisaged.

## Claims

1. Method for the design of rotor and/or stator profiles of a bivalent axial turbomachinery (1), capable of operating alternatively in driving or operating mode, said turbomachinery comprising at least one stator (11) and one rotor (12) rotatable about a rotation axis, said rotor and/or said stator comprising a hub (16, 15), an ogive and a plurality of blades (14, 13, 155) having substantially the same shape, each of the said blades having a minimum radius (152), a maximum radius (153) and a three-dimensional blade profile having one or more blade sections (1551, 1552, 1553), where said blade sections (1551, 1552, 1553) are in the shape of two-dimensional aerodynamic profiles each comprising:
- a concave side or intrados (144);
- a convex side or extrados (143);
- a median segment (142) as a set of points corresponding to the centers of all the circumferences inscribed in said two-dimensional aerodynamic profile and tangent to the intrados and extrados lines;
- a front edge (145) and a rear edge (146) as the locus of geometric points corresponding respectively to the anterior and posterior ends of the median segment;
- a half-thickness as the distance between said median segment (142) and said intrados (144) or said extrados (143), evaluated along the normal to said median segment (142) for each point of said median segment;
- a chord or chord segment (141), as the segment joining the ends of said median segment (142);
- a deflection or camber, that is a function representing the distance that is formed between the said chord and the said median segment when they do not coincide at the points outside the respective ends; said two-dimensional aerodynamic profile being described in a map reference plane (X, Y) by points representing the median segment (142) between the concave side or intrados (144) and the convex side or extrados (143 ) of the said profile (140), the chord of the said profile being superimposed on the abscissa (X) in said map reference plane and the origin of the axes (O) of said map reference plane coinciding with the end of the chord next to said front edge, whereby the method comprises
- selecting the maximum positive deflection value;
- placing the maximum deflection point between 40% and 60% of the chord abscissa;
- selecting the ordinate of the median segment with derivative greater than or equal to zero up to the point of maximum deflection and less than or equal to zero after the point of maximum deflection;
- placing the point of maximum half thickness between 40% and 60% of the abscissa of the chord;
- selecting the radius of the front edge (145) and the rear edge (146) with values greater than or equal to 3% of the length of the chord segment.

2. Method according to claim 1 comprising the further step of selecting said half-thickness with derivative greater than or equal to zero for abscissa values (X) from said origin of the axes (o) to the point of maximum half-thickness and less than or equal to zero for subsequent values of abscissa (X) after the point of maximum half-thickness.

3. Method according to claim 1 or 2 wherein:
- the maximum deflection point is positioned at 50% of the abscissa of the chord segment.
- the point of maximum half thickness is positioned at 50% of the abscissa of the chord segment.
- the value of the radius of the leading edge (145) coincides with the value of the radius of the rear edge (146); consequently introducing a conformation of a symmetrical type with respect to the axis two-dimensional aerodynamic profiles have a geometrically symmetrical conformation with respect to the axis (147) orthogonal to the chord segment (141) and passing through the midpoint (148) of said segment of chord.

4. Method according to one or more of the preceding claims comprising the further steps of:
- defining the number of blades making up said rotor or stator distributed along a concentric circumference to the rotation axis (151) of said rotor or stator;
- defining the value of the maximum radius of said rotor or stator and the value of the minimum (152) and maximum (153) blade radii for said rotor or stator;
- identifying a section of blade (1551, 1552, 1553) obtained by intersection of said blade (155) with a surface of revolution and in particular cylindrical (1541, 1542, 1543) of a solid of revolution arranged coaxially to the axis of rotation (151) of said rotor and / or stator, being said surface defined by a specific radius value (r1541, r1542, r1543) for each point of the axis of the surface of revolution and therefore being said section of blade (1551, 1552, 1553) obtained by intersection of said blade (155) with said surface of revolution at a radial distance coinciding with the radius of the surface of revolution.
- defining a discrete number of said blade sections (1551, 1552, 1553) having defined a corresponding discrete number of said radius values of said surface of revolution (r1541, r1542, r1543), said radius values being between said minimum (152) and maximum blade radius (153) of said rotor or stator for each point of the axis of rotation;
- reporting for each of said sections and for each blade a two-dimensional aerodynamic profile (140) whose keying or angular orientation with respect to the radial axis of said surface of revolution and whose dimensions, given the same shape, assume predetermined and varied values in function of the reference section;
- interpolating between the shapes of the various sections the said two-dimensional aerodynamic profiles of each blade by means of computer-assisted processing to define the three-dimensional surface representative of the blade itself where said two-dimensional aero-dynamic profiles represent the sections of each blade; said two-dimensional aerodynamic profile having a geometrically symmetrical conformation with respect to the axis (147) orthogonal to the chord segment (141) and passing through the midpoint (148) of the said chord segment.

5. Method according to one or more of the preceding claims further **characterized by** the following parameters:
- ratio between the maximum thickness of the profile and the length of the chord equal to 0.1;
- distance between the median segment (142) and the chord segment not exceeding 4% of the chord length for each point of said cord segment;
- angle between the median segment (142) and the anterior edge (145) equal to 9 sexagesimal degrees;
- angle between the median segment (142) and the posterior edge (146) equal to -9 sexagesimal degrees;
- radius of both edges equal to 4.5% of the chord.

6. Method for designing housing ducts for the bivalent axial turbomachinery stage (1) designed according to the method described in one or more of the claims 1 to 5, including stator (11) and rotor (12) each comprising a hub (16, 15), an ogive and a plurality of blades (14, 13) each blade having a respective minimum and maximum blade radius, said blades designed in accordance with the method of one or more of the preceding claims, comprising the steps of:
- Defining the profile of the rotor ogive and the stator ogive;
- Defining said housing duct as an assembly of:
- part with constant section (31) containing said rotor and said stator;
- inlet section (32) to the rotor;
- inlet section (33) to the stator;
- Defining the surface of the portions of the entrance to the rotor and the stator as a revolution of a two-dimensional profile around the rotation axis of the rotor; being the said method **characterized by**:
- Defining the profile of the rotor ogive (12) as a hemisphere with a radius substantially equal to the minimum radius of the rotor blades or the radius of the hub (16) of said rotor;
- Defining the profile of the stator ogive (11) as a hemisphere with a radius substantially equal to the minimum radius of the stator blades or the radius of the hub (15) of the stator;
- Defining the two-dimensional profile for the rotor section as part of a two-dimensional airfoil symmetrical with respect to the middle chord;
- Defining the two-dimensional profile for the stator section as part of a two-dimensional airfoil symmetrical with respect to the middle chord.

7. Method according to claim 6 wherein said two-dimensional airfoil comprises:
- a concave side or intrados (144);
- a convex or extrados side (143);
- a median segment (142) as a set of points corresponding to the center of all the circumferences inscribed in said two-dimensional aerodynamic profile and tangent to the intrados and extrados lines;
- a front edge (145) and a rear edge (146) as geometric points coinciding respectively with the anterior and posterior ends of the median segment;
- a half-thickness as the distance between said median segment (142) and said intrados (144) or said extrados (143), evaluated along the normal to said median segment (142) for each point of said median segment;
- a chord or chord segment (141), as the segment joining the ends of said median segment (142);
- a deflection or a function representing the distance that is formed between the said chord and the said median segment when they do not coincide in the points outside the respective extremes, and in which the said two-dimensional aerodynamic profile for rotor duct is further defined by the following parameters:
- Length of the half chord segment of a value not exceeding 1.5 times the maximum blade radius and preferably of a value equal to 1.25;
- deflection value lower than 25% of said length of the half chord segment and preferably equal to 24%;
- Maximum thickness equal to 30% of the length of the half-chord segment; and in which the stator duct is further defined by the following parameters:
- Length of the half chord segment of a value not exceeding 1.25 times the maximum blade radius and preferably of a value equal to 0.75;
- deflection value less than 20% of said length of the half chord segment and preferably equal to 18%;
- Maximum thickness equal to 50% of the length of the half-chord segment.

8. Method of using a turbomachinery stage made according to the method described in one or more claims 1 to 5 wherein said rotor is driven by kinetic energy of a flow of fluid passing through it.

9. Method of using a turbomachinery stage made according to the method described in one or more claims 1 to 5 in which said rotor transfers kinetic energy to a flow of fluid passing through it.

10. Bivalent axial turbomachinery stage (1), that can operate alternatively in motor or operating mode, comprising:
- a rotor (12) in turn comprising a rotor hub (16) and a predetermined number of rotor blades (14);
- a stator (11) in turn comprising a stator hub (15) and a predetermined number of stator blades (13);
said blades being described by two-dimensional aerodynamic profiles, said turbomachinery stage **characterized in that** it has a rotor and stator profile made in accordance with the method of claims 1 to 5.

11. Turbomachinery stage according to claim 10 comprising a duct for ducting said rotor and stator members made in accordance with the method of claims 6 to 7.

12. Turbomachinery stage according to claim 10 or 11 operating in a fluid of a compressible or incompressible nature and preferably in air or water.

13. Turbomachinery stage according to one or more of the preceding claims 10 to 12, in which the rotational speed of the rotor in driving mode is different from the rotor speed of the rotor in operating mode.

14. Turbomachinery stage according to one or more of the preceding claims 10 to 13 in which the following parameters of the design method are assumed:
- number of rotor blades: 15
- number of stator blades: 15
- number of rotor blade sections: 3
- minimum radius of the rotor blade: 20 cm
- maximum radius of the rotor blade: 40 cm
- chord size and pitch angle according to the following table:
| Radius | Chord | Keying |
|---|---|---|
| [cm] | [cm] | [°] |
| 20 | 12.6 | 73.3 |
| 30 | 10.1 | 49.0 |
| 40 | 8.4 | 37.0 |
- number of stator blade sections: 3
- minimum stator blade radius: 20 cm
- maximum radius of the stator blade: 40 cm
- chord size and pitch angle according to the following table:
| Radius | Chord | Keying |
|---|---|---|
| [cm] | [cm] | [°] |
| 20 | 10.9 | 66.3 |
| 30 | 11.3 | 76.3 |
| 40 | 11.7 | 81.6 |

15. Turbomachinery stage according to one or more of the preceding claims from 10 to 14 in which the nominal speed of rotation of the rotor is comprised between 10 and 5000 revolutions per minute and preferably between 500 and 2000 revolutions per minute and even more preferably of 1500 +/- 10% revolutions per minute for the operating mode and 800 +/- 10% revolutions per minute for the motor mode.

16. Turbomachinery stage according to one or more of the preceding claims 10 to 15 in combination with a control system, at least one energy source and at least one energy storage element, at least one motor combined with said rotor, one or more sensors, one or more control members for one or more members for switching the operating mode of the said stage, the control system being involved in the switching of the said turbomachinery from driving mode to operating mode and vice versa.

## Patentansprüche

1. Verfahren zum Entwerfen von Rotor- und/oder Statorprofilen einer bivalenten Axialturbomaschine (1), die wahlweise im Antriebsmodus oder im Arbeitsmodus betrieben werden kann, wobei die Turbomaschine mindestens einen Stator (11) und einen Rotor (12) umfasst, die um eine Drehachse drehbar sind, wobei der Rotor und/oder der Stator eine Nabe (16, 15), einen Spinner und eine Vielzahl von im Wesentlichen die gleiche Form aufweisenden Schaufeln (14, 13, 155) umfasst, wobei jede der Schaufeln einen minimalen Radius (152), einen maximalen Radius (153) und ein dreidimensionales Schaufelprofil mit einem oder mehreren Schaufelabschnitten (1551, 1552, 1553) aufweist,
wobei die Schaufelabschnitte (1551, 1552, 1553) die Form von zweidimensionalen aerodynamischen Profilen haben, die jeweils umfassen:
- eine konkave Seite oder Unterseite (144);
- eine konvexe Seite oder Oberseite (143);
- ein Mittelsegment (142) als eine Gruppe von Punkten, die den Mittelpunkten aller in das zweidimensionale aerodynamische Profil eingeschriebenen Kreise entsprechen und tangential zu den Unterseiten- und Oberseitenlinien verlaufen;
- eine Vorderkante (145) und eine Hinterkante (146) als Ort geometrischer Punkte, die jeweils den vorderen und hinteren Enden des Mittelsegments entsprechen;
- eine Halbdicke als der Abstand zwischen dem Mittelsegment (142) und der Unterseite (144) oder der Oberseite (143), bewertet entlang der Normalen zum Mittelsegment (142) für jeden Punkt des Mittelsegments;
- eine Sehne oder ein Sehnensegment (141) als das Segment, das die Enden des Mittelsegments (142) verbindet;
- eine Krümmung oder Wölbung, die eine Funktion ist, die den Abstand darstellt, der sich zwischen der besagten Sehne und dem besagten Mittelsegment ergibt, wenn sie an den Punkten außerhalb der jeweiligen Enden nicht zusammenfallen; wobei das zweidimensionale aerodynamische Profil in einer kartesischen Bezugsebene (X, Y) durch Punkte beschrieben wird, die das Mittelsegment (142) zwischen der konkaven Seite oder Unterseite (144) und der konvexen Seite oder Oberseite (143) des Profils (140) darstellen, wobei die Sehne des Profils über die Abszisse (X) in der kartesischen Bezugsebene gelegt ist und der Ursprung der Achsen (0) der kartesischen Bezugsebene mit dem der Vorderkante benachbarten Ende der Sehne zusammenfällt,
wobei das Verfahren umfasst
- Auswählen des maximalen positiven Wertes der Wölbung;
- Anordnen des maximalen Wölbungspunktes zwischen 40 % und 60 % der Abszisse der Sehne;
- Auswählen der Ordinate des Mittelsegments mit einer Ableitung größer oder gleich Null bis zum Punkt der maximalen Wölbung und kleiner oder gleich Null nach dem Punkt der maximalen Wölbung;
- Anordnen des Punktes der maximalen Halbdicke zwischen 40% und 60% der Abszisse der Sehne;
- Auswählen des Radius der Vorderkante (145) und der Hinterkante (146) mit Werten, die größer oder gleich 3 % der Länge des Sehnensegments sind.

2. Verfahren nach Anspruch 1, umfassend den weiteren Schritt des Auswählens der Halbdicke mit einer Ableitung größer oder gleich Null für Abszissenwerte (X) vom Ursprung der Achsen (0) bis zum Punkt der maximalen Halbdicke und kleiner oder gleich Null für nachfolgende Werte der Abszisse (X) nach dem Punkt der maximalen Halb dicke.

3. Verfahren nach Anspruch 1 oder 2, wobei
- der Punkt der maximalen Wölbung liegt bei 50 % der Abszisse des Sehnensegments.
- der Punkt der maximalen Halbdicke liegt bei 50 % der Abszisse des Sehnensegments.
- der Wert des Radius der Anströmkante (145) mit dem Wert des Radius der Hinterkante (146) übereinstimmt; dadurch wird eine in Bezug auf die Achse symmetrische Formgebung eingeführt und die zweidimensionalen aerodynamischen Profile haben eine geometrisch symmetrische Formgebung in Bezug auf die Achse (147), die orthogonal zum Sehnensegment (141) ist und durch den Mittelpunkt (148) des Sehnensegments verläuft.

4. Verfahren nach einem oder mehreren der vorhergehenden Ansprüche, das ferner folgende Schritte umfasst:
- Definieren der Anzahl der Schaufeln, die den Rotor oder Stator bilden und entlang eines konzentrischen Umfangs zur Drehachse (151) des Rotors oder Stators verteilt sind;
- Definieren des Wertes des maximalen Radius des Rotors oder Stators und des Wertes der minimalen (152) und maximalen (153) Schaufelradien für den Rotor oder Stator;
- Identifizieren eines Schaufelabschnitts (1551, 1552, 1553), der durch da Schneiden der Schaufel (155) mit einer insbesondere zylindrischen Rotationsfläche (1541, 1542, 1543) eines koaxial zur Drehachse (151) des Rotors und/oder Stators angeordneten Rotationskörpers erhalten wird, wobei die Fläche durch einen bestimmten Radiuswert (r1541, r1542, r1543) für jeden Punkt der Achse der Rotationsfläche definiert ist und daher der Schaufelabschnitt (1551, 1552, 1553) ist, der durch das Schneiden der Schaufel (155) mit der Rotationsfläche in einem mit dem Radius der Rotationsfläche zusammenfallenden radialen Abstand erhalten wird.
- Definieren einer diskreten Anzahl der Schaufelabschnitte (1551, 1552, 1553), wobei eine entsprechende diskrete Anzahl der Radiuswerte der Rotationsfläche (r1541, r1542, r1543) definiert wurde, wobei die Radiuswerte zwischen dem minimalen (152) und maximalen Schaufelradius (153) des Rotors oder Stators für jeden Punkt der Drehachse liegen;
- Erstellen eines zweidimensionalen aerodynamischen Profils (140) für jeden der genannten Abschnitte und für jede Schaufel, dessen Verkeilung oder Winkelausrichtung in Bezug auf die Radialachse der besagten Rotationsfläche und dessen Abmessungen bei gleichbleibender Form vorbestimmte und variierende Werte in Abhängigkeit von dem Referenzabschnitt annehmen;
- Interpolieren zwischen den Formen der verschiedenen Abschnitte der zweidimensionalen aerodynamischen Profile jeder Schaufel mittels computergestützter Verarbeitung, um die dreidimensionale Oberfläche zu definieren, die für die Schaufel selbst repräsentativ ist, wobei die zweidimensionalen aerodynamischen Profile die Abschnitte jeder Schaufel darstellen; wobei das zweidimensionale aerodynamische Profil eine geometrisch symmetrische Formgebung in Bezug auf die Achse (147) hat, die orthogonal zu dem Sehnensegment (141) ist und durch den Mittelpunkt (148) des Sehnensegments verläuft.

5. Verfahren nach einem oder mehreren der vorhergehenden Ansprüche, ferner **gekennzeichnet durch** die folgenden Parameter:
- Verhältnis zwischen der maximalen Dicke des Profils und der Länge der Sehne gleich 0,1;
- Abstand zwischen dem Mittelsegment (142) und dem Sehnensegment nicht größer als 4 % der Sehnenlänge für jeden Punkt des besagten Sehnensegments;
- Winkel zwischen dem Mittelsegment (142) und der Vorderkante (145) gleich 9 Sexagesimalgrad;
- Winkel zwischen dem Mittelsegment (142) und der Hinterkante (146) gleich -9 Sexagesimalgrad;
- Radius der beiden Kanten gleich 4,5 % der Sehne.

6. Verfahren zum Entwerfen von Gehäuseleitungen für die bivalente axiale Turbomaschinenstufe (1), die nach dem in einem oder mehreren der Ansprüche 1 bis 5 beschriebenen Verfahren entworfen ist, umfassend einen Stator (11) und einen Rotor (12), die jeweils eine Nabe (16, 15), einen Spinner und eine Mehrzahl von Schaufeln (14, 13) umfassen, wobei jede Schaufel einen jeweiligen minimalen und maximalen Schaufelradius aufweist, wobei die Schaufeln nach dem Verfahren eines oder mehrerer der vorhergehenden Ansprüche entworfen sind, umfassend die Schritte:
- Definieren des Profils der Spinner des Rotors und des Stators;
- Definieren der Gehäuseleitung als eine Anordnung aus:
- einem Teil mit konstantem Querschnitt (31), der den Rotor und den Stator enthält;
- Einlassabschnitt (32) zum Rotor;
- Einlassabschnitt (33) zum Stator;
- Definieren der Oberfläche der Eingangsabschnitte des Rotors und des Stators als eine Rotation eines zweidimensionalen Profils um die Drehachse des Rotors; wobei das Verfahren **gekennzeichnet ist durch**:
- Definieren des Profils des Rotor-Spinners (12) als Halbkugel mit einem Radius, der im Wesentlichen gleich dem minimalen Radius der Rotorblätter oder dem Radius der Nabe (16) des Rotors ist;
- Definieren des Profils des Stator-Spinners (11) als Halbkugel mit einem Radius, der im Wesentlichen gleich dem minimalen Radius der Statorschaufeln oder dem Radius der Nabe (15) des Stators ist;
- Definieren des zweidimensionalen Profils für den Rotorabschnitt als Teil eines in Bezug auf die Mittelsehne symmetrischen zweidimensionalen Tragflächenprofils;
- Definieren des zweidimensionalen Profils für den Statorabschnitt als Teil eines in Bezug auf die Mittelsehne symmetrischen zweidimensionalen Tragflächenprofils.

7. Verfahren nach Anspruch 6, wobei das zweidimensionale Tragflächenprofil umfasst:
- eine konkave Seite oder Unterseite (144);
- eine konvexe Seite oder Oberseite (143);
- ein Mittelsegment (142) als eine Gruppe von Punkten, die dem Mittelpunkt aller in das zweidimensionale aerodynamische Profil eingeschriebenen Kreise entsprechen und tangential zu den Unterseiten- und Oberseitenlinien verlaufen;
- eine Vorderkante (145) und eine Hinterkante (146) als geometrische Punkte, die jeweils mit den vorderen und hinteren Ende des Mittelsegments übereinstimmen;
- eine Halbdicke als der Abstand zwischen dem Mittelsegment (142) und der Unterseite (144) oder der Oberseite (143), bewertet entlang der Normalen zum Mittelsegment (142) für jeden Punkt des Mittelsegments;
- eine Sehne oder ein Sehnensegment (141) als das Segment, das die Enden des Mittelsegments (142) verbindet;
eine Wölbung oder eine Funktion, die den Abstand darstellt, der sich zwischen der besagten Sehne und dem besagten Mittelsegment ergibt, wenn sie in den Punkten außerhalb der jeweiligen Enden nicht zusammenfallen; wobei das zweidimensionale aerodynamische Profil für Rotorleitung ist durch die folgenden Parameter weiter definiert:
- Länge des Halbsehnensegments mit einem Wert, der das 1,5-fache des maximalen Schaufelradius nicht überschreitet, und vorzugsweise einen Wert von 1,25 hat;
- Wölbungswert kleiner als 25 % der Länge des Halbsehnensegments und vorzugsweise gleich 24 %;
- Maximale Dicke gleich 30 % der Länge des Halbsehnensegments;
und bei dem die Statorleitung durch folgende Parameter weiter definiert ist:
- Länge des Halbsehnensegments mit einem Wert, der das 1,25-fache des maximalen Schaufelradius nicht überschreitet, und vorzugsweise einen Wert von 0,75 hat;
- Wölbungswert kleiner als 20% der Länge des Halbsehnensegments und vorzugsweise gleich 18%;
- Maximale Dicke gleich 50% der Länge des Halbsehnensegments.

8. Verfahren zur Verwendung einer Turbomaschinenstufe, die nach dem in einem oder mehreren der Ansprüche 1 bis 5 beschriebenen Verfahren hergestellt wurde, wobei der Rotor durch die kinetische Energie einer durch ihn strömenden Flüssigkeit angetrieben wird.

9. Verfahren zur Verwendung einer Turbomaschinenstufe, die nach dem in einem oder mehreren der Ansprüche 1 bis 5 beschriebenen Verfahren hergestellt wurde, bei dem der Rotor kinetische Energie an eine ihn durchströmende Fluidströmung überträgt.

10. Bivalente axiale Turbomaschinenstufe (1), die wahlweise im Antriebs- oder Arbeitsmodus arbeiten kann, umfassend:
- einen Rotor (12), der seinerseits eine Rotornabe (16) und eine vorbestimmte Anzahl von Rotorschaufeln (14) umfasst;
- einen Stator (11), der seinerseits eine Statornabe (15) und eine vorbestimmte Anzahl von Statorschaufeln (13) umfasst;
wobei die Schaufeln durch zweidimensionale aerodynamische Profile beschrieben werden, wobei die Turbomaschinenstufe **dadurch gekennzeichnet ist, dass** sie ein Rotor- und Statorprofil aufweist, das nach dem Verfahren der Ansprüche 1 bis 5 hergestellt wird.

11. Turbomaschinenstufe nach Anspruch 10, umfassend eine Leitung zur Aufnahme der Rotor- und Statorelemente, die nach dem Verfahren der Ansprüche 6 bis 7 hergestellt wurde.

12. Turbomaschinenstufe nach Anspruch 10 oder 11, die in einem kompressiblen oder inkompressiblen Fluid, vorzugsweise in Luft oder Wasser, arbeitet.

13. Turbomaschinenstufe nach einem oder mehreren der vorhergehenden Ansprüche 10 bis 12, bei der die Drehzahl des Rotors im Antriebsmodus von der Rotordrehzahl des Rotors im Arbeitsmodus verschieden ist.

14. Turbomaschinenstufe nach einem oder mehreren der vorhergehenden Ansprüche 10 bis 13, bei der die folgenden Parameter des Entwurfsverfahrens vorgegeben sind:
- Anzahl der Rotorblätter: 15
- Anzahl der Statorschaufeln: 15
- Anzahl der Rotorschaufelabschnitte: 3
- Minimaler Radius des Rotorblatts: 20 cm
- Maximaler Radius des Rotorblattes: 40 cm
- Sehnengröße und Anstellwinkel gemäß der folgenden Tabelle:
| Radius | Sehne | Keilung |
|---|---|---|
| [cm] | [cm] | [°] |
| 20 | 12.6 | 73.3 |
| 30 | 10.1 | 49.0 |
| 40 | 8.4 | 37.0 |
- Anzahl der Statorschaufelabschnitte: 3
- Minimaler Radius des Statorblatts: 20 cm
- Maximaler Radius des Statorblattes: 40 cm
- Sehnengröße und Anstellwinkel gemäß der folgenden Tabelle:
| Radius | Sehne | Keilung |
|---|---|---|
| [cm] | [cm] | [°] |
| 20 | 10.9 | 66.3 |
| 30 | 11.3 | 76.3 |
| 40 | 11.7 | 81.6 |

15. Turbomaschinenstufe nach einem oder mehreren der vorhergehenden Ansprüche 10 bis 14, bei der die Nenndrehzahl des Rotors zwischen 10 und 5000 Umdrehungen pro Minute und vorzugsweise zwischen 500 und 2000 Umdrehungen pro Minute und noch bevorzugter von 1500 +/- 10% Umdrehungen pro Minute für den Arbeitsmodus und 800 +/- 10% Umdrehungen pro Minute für den Antriebsmodus umfasst ist.

16. Turbomaschinenstufe nach einem oder mehreren der vorhergehenden Ansprüche 10 bis 15 in Kombination mit einem Steuersystem, mindestens einer Energiequelle und mindestens einem Energiespeicherelement, mindestens einem mit dem Rotor kombinierten Motor, einem oder mehreren Sensoren, einem oder mehreren Steuerorganen für ein oder mehrere Schaltorgane des Arbeitsmodus der Stufe, wobei das Steuersystem an der Umschaltung der Turbomaschine vom Antriebsmodus in den Arbeitsmodus und umgekehrt beteiligt ist.

## Revendications

1. Méthode de conception des profils de rotor et/ou de stator d'une turbomachine axiale bivalente (1), pouvant fonctionner alternativement en mode de réceptrice ou génératrice, ladite turbomachine comprenant au moins un stator (11) et un rotor (12) qui peuvent tourner autour d'un axe de rotation, ledit rotor et/ou ledit stator comprenant un moyeu (16, 15), une ogive et une pluralité d'aubes (14, 13, 155) ayant sensiblement la même forme, chacune desdites aubes ayant un rayon minimal (152), un rayon maximal (153) et un profil d'aube tridimensionnel ayant une ou plusieurs sections (1551, 1552, 1553) d'aube,
où lesdites sections (1551, 1552, 1553) d'aube ont la forme de profils aérodynamiques bidimensionnels comprenant chacun:
- un côté concave ou intrados (144);
- un côté convexe ou extrados (143);
- un segment médian (142) en tant qu'un ensemble de points correspondant aux centres de toutes les circonférences inscrites dans ledit profil aérodynamique bidimensionnel et tangentes aux lignes de intrados et de extrados;
- un bord antérieur (145) et un bord arrière (146) en tant que lieu de points géométriques correspondant respectivement aux extrémités antérieure et postérieure du segment médian;
- une demi-épaisseur en tant que la distance entre ledit segment médian (142) et ledit intrados (144) ou ledit extrados (143), évaluée le long de la normale audit segment médian (142) pour chaque point dudit segment médian;
- une corde ou un segment de corde (141), en tant que le segment reliant les extrémités dudit segment médian (142);
- une flèche ou cambrure, c'est-à-dire une fonction représentant la distance qui se forme entre ladite corde et ledit segment médian lorsqu'ils ne coïncident pas aux niveau des points situés à l'extérieur des extrémités respectives; ledit profil aérodynamique bidimensionnel étant décrit dans un plan de référence cartographique (X, Y) par des points représentant le segment médian (142) entre le côté concave ou intrados (144) et le côté convexe ou extrados (143) dudit profil (140), la corde dudit profil étant superposée sur l'abscisse (X) dans ledit plan de référence cartographique et l'origine des axes (O) dudit plan de référence cartographique coïncidant avec l'extrémité de la corde située à côté dudit bord antérieur, de sorte que la méthode comprend
- sélectionner la valeur maximale positive de flèche;
- placer le point de flèche maximale entre 40% et 60 % de l'abscisse de la corde;
- sélectionner l'ordonnée du segment médian dont la dérivée est supérieure ou égale à zéro jusqu'au point de flèche maximale et inférieure ou égale à zéro après le point de flèche maximale;
- placer le point de demi-épaisseur maximale entre 40% et 60% de l'abscisse de la corde;
- sélectionner le rayon du bord antérieur (145) et du bord arrière (146) avec des valeurs supérieures ou égales à 3% de la longueur du segment de corde.

2. Méthode selon la revendication 1 comprenant l'étape supplémentaire de sélectionner ladite demi-épaisseur avec dérivée supérieure ou égale à zéro pour des valeurs d'abscisses (X) depuis ladite origine des axes (o) jusqu'au point de demi-épaisseur maximale et inférieure ou égale à zéro pour des valeurs d'abscisses (X) suivantes après le point de demi-épaisseur maximale.

3. Méthode selon la revendication 1 ou 2, dans laquelle:
- le point de flèche maximale est situé à 50 % de l'abscisse du segment de corde;
- le point de demi-épaisseur maximale est situé à 50% de l'abscisse du segment de corde;
- la valeur du rayon du bord d'attaque (145) coïncide avec la valeur du rayon du bord arrière (146); introduisant ainsi une conformation de type symétrique par rapport à l'axe, des profils aérodynamiques bidimensionnels ont une conformation géométriquement symétrique par rapport à l'axe (147) orthogonal au segment (141) de corde et passant par le point médian (148) dudit segment de corde.

4. Méthode selon une ou plusieurs des revendications précédentes comprenant les étapes supplémentaires de:
- définir le nombre d'aubes composant ledit rotor ou stator réparties sur une circonférence concentrique à l'axe de rotation (151) dudit rotor ou stator;
- définir la valeur du rayon maximal dudit rotor ou stator et la valeur des rayons minimal (152) et maximal (153) des aubes dudit rotor ou stator;
- identifier une section (1551, 1552, 1553) d'aube obtenue par intersection de ladite aube (155) avec une surface de révolution et en particulier cylindrique (1541, 1542, 1543) d'un solide de révolution disposé coaxialement à l'axe de rotation (151) dudit rotor et/ou stator, ladite surface étant définie par une valeur de rayon spécifique (r1541, r1542, r1543) pour chaque point de l'axe de la surface de révolution et étant donc ladite section (1551, 1552, 1553) d'aube obtenue par intersection de ladite aube (155) avec ladite surface de révolution à une distance radiale coïncidant avec le rayon de la surface de révolution;
- définir un nombre discret desdites sections (1551, 1552, 1553) d'aube ayant défini un nombre discret correspondant desdites valeurs de rayon de ladite surface de révolution (r1541, r1542, r1543), lesdites valeurs de rayon étant comprises entre ledit rayon d'aube minimal (152) et maximal (153) dudit rotor ou stator pour chaque point de l'axe de rotation;
- rapporter, pour chacune desdites sections et pour chaque aube, un profil aérodynamique bidimensionnel (140) dont angle d'incidence ou orientation angulaire par rapport à l'axe radial de ladite surface de révolution et dont les dimensions, à forme égale, prennent des valeurs prédéterminées et variées en fonction de la section de référence;
- interpoler entre les formes des différentes sections lesdits profils aérodynamiques bidimensionnels de chaque aube au moyen d'un procédé assisté par ordinateur pour définir la surface tridimensionnelle représentative de l'aube elle-même où lesdits profils aérodynamiques bidimensionnels représentent les sections de chaque aube; ledit profil aérodynamique bidimensionnel ayant une conformation géométriquement symétrique par rapport à l'axe (147) orthogonal au segment (141) de corde et passant par le point médian (148) dudit segment de corde.

5. Méthode selon une ou plusieurs des revendications précédentes **caractérisée en outre par** les paramètres suivants:
- rapport entre l'épaisseur maximale du profil et la longueur de la corde égal à 0,1;
- distance entre le segment médian (142) et le segment de corde ne dépassant pas 4 % de la longueur de la corde pour chaque point dudit segment de corde;
- angle entre le segment médian (142) et le bord antérieur (145) égal à 9 degrés sexagésimaux;
- angle entre le segment médian (142) et le bord arrière (146) égal à -9 degrés sexagésimaux;
- rayon des deux bords égal à 4,5 % de la corde.

6. Méthode de conception de conduits de logement pour l'étage de turbomachine axiale bivalente (1) conçu selon la méthode décrite dans une ou plusieurs des revendications 1 à 5, comprenant un stator (11) et un rotor (12) comprenant chacun un moyeu (16, 15), une ogive et une pluralité d'aubes (14, 13), chaque aube ayant un respectif rayon d'aube minimal et maximal, lesdites aubes étant conçues selon la méthode selon une ou plusieurs des revendications précédentes, comprenant les étapes de:
- Définir le profil de l'ogive du rotor et de l'ogive du stator;
- Définir ledit conduit de logement comme un assemblage de:
- partie à section constante (31) contenant ledit rotor et ledit stator;
- section d'entrée (32) au rotor;
- section d'entrée (33) au stator;
- Définir la surface des portions de l'entrée du rotor et du stator comme une révolution d'un profil bidimensionnel autour de l'axe de rotation du rotor; ladite méthode étant **caractérisée par**:
- Définir le profil de l'ogive du rotor (12) comme un hémisphère dont un rayon est sensiblement égal au rayon minimal des aubes de rotor ou au rayon du moyeu (16) dudit rotor;
- Définir le profil de l'ogive du stator (11) comme un hémisphère dont le rayon est sensiblement égal au rayon minimal des aubes de stator ou au rayon du moyeu (15) du stator;
- Définir le profil bidimensionnel de la section de rotor en tant que partie d'un profil aérodynamique bidimensionnel symétrique par rapport à la corde centrale;
- Définir le profil bidimensionnel de la section de stator en tant que partie d'un profil aérodynamique bidimensionnel symétrique par rapport à la corde centrale.

7. Méthode selon la revendication 6, dans laquelle ledit profil aérodynamique bidimensionnel comprend:
- un côté concave ou intrados (144);
- un côté convexe ou extrados (143);
- un segment médian (142) en tant qu'un ensemble de points correspondant au centre de toutes les circonférences inscrites dans ledit profil aérodynamique bidimensionnel et tangentes aux lignes de intrados et de extrados;
- un bord antérieur (145) et un bord arrière (146) en tant que points géométriques coïncidant respectivement avec les extrémités antérieure et postérieure du segment médian;
- une demi-épaisseur en tant que la distance entre ledit segment médian (142) et ledit intrados (144) ou ledit extrados (143), évaluée le long de la normale audit segment médian (142) pour chaque point dudit segment médian;
- une corde ou un segment de corde (141), en tant que le segment reliant les extrémités dudit segment médian (142);
- une flèche ou une fonction représentant la distance qui est formée entre ladite corde et ledit segment médian lorsqu'ils ne coïncident pas dans les points situés en dehors des extrêmes respectifs, et où ledit profil aérodynamique bidimensionnel pour le conduit du rotor est en outre défini par les paramètres suivants:
- Longueur du segment de demi-corde d'une valeur ne dépassant pas 1,5 fois le rayon maximal de l'aube et de préférence d'une valeur égale à 1,25;
- valeur de flèche inférieure à 25 % de ladite longueur du segment de demi-corde et de préférence égale à 24 %;
- Épaisseur maximale égale à 30% de la longueur du segment de demi-corde;
et où le conduit du stator est en outre défini par les paramètres suivants:
- Longueur du segment de demi-corde d'une valeur ne dépassant pas 1,25 fois le rayon maximal de l'aube et de préférence d'une valeur égale à 0,75;
- valeur de flèche inférieure à 20% de ladite longueur du segment de demi-corde et de préférence égale à 18%;
- Épaisseur maximale égale à 50% de la longueur du segment de demi-corde;

8. Méthode d'utilisation d'un étage de turbomachine fabriqué selon la méthode décrite dans une ou plusieurs des revendications 1 à 5, où ledit rotor est entraîné par énergie cinétique d'un écoulement de fluide le traversant.

9. Méthode d'utilisation d'un étage de turbomachine fabriqué selon la méthode décrite dans une ou plusieurs des revendications 1 à 5 dans laquelle ledit rotor transfère énergie cinétique à un écoulement de fluide le traversant.

10. Étage de turbomachine axiale bivalente (1), pouvant fonctionner alternativement en mode de réceptrice ou de génératrice, comprenant:
- un rotor (12) comprenant à son tour un moyeu (16) de rotor et un nombre prédéterminé d'aubes (14) de rotor;
- un stator (11) comprenant à son tour un moyeu (15) de stator et un nombre prédéterminé d'aubes (13) de stator;
lesdites aubes étant décrites par des profils aérodynamiques bidimensionnels, ledit étage de turbomachine **caractérisé en ce qu'**il présente un profil de rotor et de stator réalisé selon la méthode des revendications 1 à 5.

11. Étage de turbomachine selon la revendication 10 comprenant un conduit pour canaliser lesdits éléments de rotor et de stator réalisés selon la méthode des revendications 6 à 7.

12. Étage de turbomachine selon la revendication 10 ou 11 fonctionnant dans un fluide de nature compressible ou incompressible et de préférence dans l'air ou dans l'eau.

13. Étage de turbomachine selon une ou plusieurs des revendications précédentes, où la vitesse de rotation du rotor en mode de réceptrice est différente de la vitesse de rotation du rotor en mode de génératrice.

14. Étage de turbomachine selon une ou plusieurs des revendications précédentes 10 à 13 où sont supposés les paramètres suivants de la méthode de conception:
- nombre d'aubes de rotor: 15
- nombre d'aubes de stator: 15
- nombre de sections d'aubes de rotor: 3
- rayon minimal de l'aube de rotor: 20 cm
- rayon maximal de l'aube de rotor: 40 cm
- dimension de la corde et l'angle d'incidence selon le tableau suivant:
| Rayon | Corde | Angle d'incidence |
|---|---|---|
| [cm] | [cm] | [°] |
| 20 | 12,6 | 73,3 |
| 30 | 10,1 | 49,0 |
| 40 | 8,4 | 37,0 |
- nombre de sections d'aubes de stator: 3
- rayon minimal d'aubes de stator: 20 cm
- rayon maximal d'aube de stator: 40 cm
- dimension de la corde et angle d'incidence selon le tableau suivant:
| Rayon | Corde | Angle d'incidence |
|---|---|---|
| [cm] | [cm] | [°] |
| 20 | 10,9 | 66,3 |
| 30 | 11,3 | 76,3 |
| 40 | 11,7 | 81,6 |

15. Étage de turbomachine selon l'une ou plusieurs des revendications précédentes 10 à 14 dans lequel la vitesse nominale de rotation du rotor est comprise entre 10 et 5000 tours par minute et de préférence entre 500 et 2000 tours par minute et encore plus préférentiellement de 1500 +/- 10% tours par minute pour le mode de génératrice et 800 +/- 10% tours par minute pour le mode de réceptrice.

16. Étage de turbomachine selon une ou plusieurs des revendications précédentes 10 à 15 en combinaison avec un système de commande, au moins une source d'énergie et au moins un élément de stockage d'énergie, au moins un moteur associé audit rotor, un ou plusieurs capteurs, un ou plusieurs éléments de commande pour un ou plusieurs éléments de commutation du mode de fonctionnement dudit étage, le système de commande intervenant dans la commutation de ladite turbomachine du mode de réceptrice au mode de génératrice et vice versa.
